(19) Europäisches Patentamt
European Patent Office
Office européen des brevets

(11) **EP 4 202 689 A1**

(12) **EUROPEAN PATENT APPLICATION**
published in accordance with Art. 153(4) EPC

(43) Date of publication:
**28.06.2023 Bulletin 2023/26**

(21) Application number: **20954631.6**

(22) Date of filing: **25.09.2020**

(51) International Patent Classification (IPC):
**G06F 11/36** (2006.01)

(52) Cooperative Patent Classification (CPC):
**G06F 11/36**

(86) International application number:
**PCT/CN2020/117921**

(87) International publication number:
**WO 2022/061779 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventor: **PENG, Fei
Beijing 100102 (CN)**

(74) Representative: **Isarpatent
Patent- und Rechtsanwälte Barth
Charles Hassa Peckmann & Partner mbB
Friedrichstrasse 31
80801 München (DE)**

(54) **CHANGE CORRELATION ANALYSIS-BASED TEST CASE SELECTION METHOD AND APPARATUS**

(57) A change correlation analysis-based test case selection method and apparatus suitable for researching and developing an operation and maintenance integrated flow. The method comprises: obtaining distributed tracking records for a set of historical test cases executed by an application program and code change information changed by the application program, wherein the distributed tracking records are used for showing a process flow, in the application program, of a user transaction triggered when a test case is executed; in addition, according to the distributed tracking records and the code change information, determining the correlation metric value of each candidate test case in a set of candidate test cases relative to the change of the application program; and then according to the correlation metric value of each candidate test case, selecting a target test case from the set of candidate test cases. According to the method, a test case set having optimal correlation can be automatically selected according to specific code change and a quality verification target, thereby ensuring software delivery quality in the continuous evolution and change process of the application program.

FIG.1

EP 4 202 689 A1

## Description

## Technical Field

The present disclosure generally relates to the field of software development, and in particular, to a change correlation analysis-based test case selection method and apparatus applicable to a development and operations (DevOps) process.

## Background Art

Development and operations is the most popular software development methodology in the software industry today. A core idea is to introduce regular release and continuous integration, to shorten a software development cycle and increase a release frequency. Although this methodology can effectively shorten a software delivery time and reduce software change costs, it also poses a challenge to testing and quality verification, that is, how to ensure software delivery quality with less time and effort in a continuous evolution and change process of software.

In a conventional software project, software testing is usually performed by a dedicated testing team. The project is clearly divided into a development phase and a testing phase, and more time is required to ensure that the software is fully tested and verified. Such experience is no longer applicable to a software development process of DevOps.

In a DevOps-based software development process, software testing should be integrated into code development, code building, and code deployment processes, and should be continuously performed, so that software can be updated throughout a continuous process from development to building to deployment. For example, whenever a software developer delivers a software product, a code building process is triggered. A continuous integration engine compiles source code, and runs a set of automated unit tests. If code compilation does not succeed or any unit testing fails, the code building process fails, and the software developer is notified. If the code building process is successfully completed, code delivery is accepted and the code is deployed to a test environment for further verification, for example, executing function testing. If all tests are passed, the software version can be released, and the software version can be deployed in a production environment. In this way, software code can be developed, delivered, tested, and deployed without interruption. It can be learned that the DevOps process requires a systematic testing method that allows for early verification, frequent verification, and automated verification of a software code change, which may also be referred to as continuing testing or continuous testing. Correct implementation of continuous testing can ensure that software quality is fully evaluated in each step of the DevOps process, making it possible to rapidly deliver and deploy a software version free of defects.

Therefore, as a best practice, continuous testing has been widely used in software development organizations. During continuous testing, a key problem that needs to be resolved is how to select an appropriate test case for quality verification of an application change at a specific phase of software development.

## Summary of the Invention

In view of the foregoing, the present disclosure provides a change correlation analysis-based test case selection method and test case selection apparatus for a DevOps process. With the test case selection method and the test case selection apparatus, testing and verification can be performed on an application change in short time and with high efficiency, thereby ensuring delivery quality in a continuous evolution and change process of software.

According to an aspect of the present disclosure, a change correlation analysis-based test case selection method for a development and operations process is provided, including: obtaining a distributed trace record of a collection of historical test cases executed for an application and code change information of an application change, where the distributed trace record is used to show a processing procedure, in the application, of a user transaction triggered when a test case is executed; determining a correlation metric value of each candidate test case in a collection of candidate test cases relative to the application change based on the distributed trace record and the code change information; and selecting a target test case from the collection of candidate test cases based on the correlation metric value of each candidate test case.

In the foregoing method, the correlation metric value of each historical test case relative to the application change is determined based on the distributed trace record of the historical test case and the code change information of the application change, and the target test case is selected by using the correlation metric value of each historical test case. Only a test case with best correlation with the application change may be used to perform testing and verification. This can reduce a quantity of test cases that need to be executed during testing and verification, shorten a time required for testing, and improve test efficiency.

Optionally, in an example of the foregoing aspect, the correlation metric value may include at least one of the following metric values: test coverage, test intensity, and test efficiency.

In the foregoing method, the test coverage, the test intensity, and the test efficiency are used to calculate the correlation metric value, so that a degree of association between the test case and the application change can be reflected more accurately. Therefore, a test case with a high correlation can be selected more accurately, thereby further improving a test effect.

Optionally, in an example of the foregoing aspect, the test coverage includes component coverage and/or communication path coverage, and/or the test efficiency includes time efficiency and/or working efficiency.

In the foregoing method, the degree of association between the test case and the application change may be determined more accurately by using the component coverage and/or the communication path coverage as the test coverage and by using the time efficiency and/or the working efficiency as the test efficiency, thereby improving accuracy of determining the correlation metric value of the test case, and further improving a test effect.

Optionally, in an example of the foregoing aspect, the correlation metric value includes a normalized correlation metric value.

In the foregoing method, a correlation between the test case and the application change is determined by using the normalized correlation metric value, so that the adverse effects caused by different measurement units of the correlation metric values can be eliminated, thereby improving accuracy of determining the correlation metric value.

Optionally, in an example of the foregoing aspect, the selecting a target test case from the collection of candidate test cases based on the correlation metric value of each candidate test case may include: determining a performance metric value of each candidate test case based on the correlation metric value of each candidate test case; and selecting the target test case from the collection of candidate test cases based on the performance metric value of each candidate test case.

In the foregoing method, the performance metric value of the test case is determined by using the correlation metric value, and the target test case is selected by using the performance metric value, so that the target test case can be selected when test performance is considered, thereby ensuring a test effect of the application change.

Optionally, in an example of the foregoing aspect, each correlation metric value has a weight, and the determining a performance metric value of each candidate test case based on the correlation metric value of each candidate test case may include: determining the performance metric value of each candidate test case based on the correlation metric value of each candidate test case and the weight of the candidate test case.

In the foregoing method, different weights are assigned to the correlation metric value, so that selection of the target test case can better meet an application scenario or a specific requirement.

Optionally, in an example of the foregoing aspect, the selecting the target test case from the collection of candidate test cases based on the performance metric value of each candidate test case may include: selecting, from the collection of candidate test cases as the target test case, a candidate test case with a performance metric value higher than a predetermined threshold; selecting, from the collection of candidate test cases as the target test case, a candidate test case with a performance measurement value among top N, where N is a predetermined positive integer or a predetermined percentage; or selecting the target test case from the collection of candidate test cases based on a first predetermined test case selection policy and the performance metric value of each candidate test case, where the first predetermined test case selection policy is a combined selection policy obtained based on the performance metric value of each candidate test case.

In the foregoing method, the target test case is selected by using different test selection policies, so that the selected target test case can be applied to different application scenarios, for example, application scenarios that have different application environments, different test objectives, or different application requirements.

Optionally, in an example of the foregoing aspect, the selecting a target test case from the collection of candidate test cases based on the correlation metric value of each candidate test case may include: providing the correlation metric value of each candidate test case for a test case selection model to determine the target test case.

In the foregoing method, the correlation metric values obtained based on the historical data are used as the model training data for the test case selection model to train the test case selection model, and the target test case is selected by using the trained test case selection model, so that accuracy of determining the target test case can be improved.

Optionally, in an example of the foregoing aspect, the selecting a target test case from the collection of candidate test cases based on the correlation metric value of each candidate test case may include: selecting the target test case from the collection of candidate test cases based on a second predetermined test case selection policy and the correlation metric value of each candidate test case, where the second predetermined test case selection policy is a combined selection policy obtained based on the correlation metric value of each candidate test case.

In the foregoing method, the target test case can be selected by using the combination policy obtained based on the correlation metric value, so that selection of the target test case can be simpler and more efficient.

According to another aspect of the present disclosure, a change correlation analysis-based test case selection apparatus for a DevOps process is provided, including: a trace record obtaining unit, configured to obtain a distributed trace record of a collection of historical test cases executed for an application, where the distributed trace record is used to show a processing procedure, in the application, of a user transaction triggered when a test case is executed; a code change information obtaining unit, configured to obtain code change information of an application change; a correlation metric value determining unit, configured to determine a correlation metric value of each candidate test case in a collection of candidate test cases relative to the application change based on the distributed trace record and the code change information; and a test case selection unit, configured to select a target test case from the collection of candidate test cases based on the correlation metric value of each candidate test case.

Optionally, in an example of the foregoing aspect, the correlation metric value includes at least one of the following metric values: test coverage, test intensity, and test efficiency.

Optionally, in an example of the foregoing aspect, the test coverage includes component coverage and/or communication path coverage, and/or the test efficiency includes time efficiency and/or working efficiency.

Optionally, in an example of the foregoing aspect, the test case selection unit includes: a performance metric value determining module, configured to determine a performance metric value of each candidate test case based on the correlation metric value of each candidate test case; and a test case selection module, configured to select the target test case from the collection of candidate test cases based on the performance metric value of each candidate test case.

Optionally, in an example of the foregoing aspect, each correlation metric value has a weight, and the performance metric value determining module is configured to determine the performance metric value of each candidate test case based on the correlation metric value of each candidate test case and the weight of the candidate test case.

Optionally, in an example of the foregoing aspect, the test case selection module is configured to: select, from the collection of candidate test cases as the target test case, a candidate test case with a performance metric value higher than a predetermined threshold; select, from the collection of candidate test cases as the target test case, a candidate test case with a performance metric value among top N, where N is a predetermined positive integer or a predetermined percentage; or select the target test case from the collection of candidate test cases based on a first predetermined test case selection policy and the performance metric value of each candidate test case, where the first predetermined test case selection policy is a combined selection policy obtained based on the performance metric value of each candidate test case.

Optionally, in an example of the foregoing aspect, the test case selection unit is configured to provide the correlation metric value of each candidate test case for a test case selection model to determine the target test case.

Optionally, in an example of the foregoing aspect, the test case selection unit is configured to select the target test case from the collection of candidate test cases based on a second predetermined test case selection policy and the correlation metric value of each candidate test case, where the second predetermined test case selection policy is a combined selection policy obtained based on the correlation metric value of each candidate test case.

According to another aspect of the present disclosure, a computing device is provided, including: at least one processor; and a memory coupled to the at least one processor, where the memory is configured to store instructions that, when executed by the at least one processor, cause the at least one processor to perform the foregoing test case selection method.

According to another aspect of the present disclosure, a machine-readable storage medium is provided, where the medium stores executable instructions that, when executed, cause the machine to perform the foregoing test case selection method.

According to another aspect of the present disclosure, a computer program product is provided, where the product is tangibly stored in a computer-readable medium and includes computer executable instructions that, when executed, cause at least one processor to perform the foregoing test case selection method.

**Brief Description of the Drawings**

The essence and advantages of the specification can be further understood with reference to the following drawings. In the drawings, similar components or features may have identical reference numerals.

FIG. 1 is an example flowchart of a change correlation analysis-based test case selection method for a DevOps process according to an embodiment of the present disclosure;

FIG. 2 is an example schematic diagram of an application with a microservice architecture according to an embodiment of the present disclosure;

FIG. 3 is an example schematic diagram of a distributed trace record according to an embodiment of the present disclosure;

FIG. 4 is an example schematic diagram of a span information list according to an embodiment of the present disclosure;

FIG. 5 is an example schematic diagram of a communication path correlated with a changed component in an application according to an embodiment of the present disclosure;

FIG. 6 is an example schematic diagram of normalized metric values of test intensity according to an embodiment of the present disclosure;

FIG. 7 is an example schematic diagram of using different test case selection policies in a DevOps process;

FIG. 8 is an example block diagram of a change correlation analysis-based test case selection apparatus for a DevOps process according to an embodiment of the present disclosure;

FIG. 9 is a block diagram of an implementation example of a test case selection unit according to an embodiment of the present disclosure; and
FIG. 10 is a schematic diagram of a computing device for implementing a change correlation analysis-based test case selection process according to an embodiment of the present disclosure.

Reference numerals

100 Test case selection process
110 Obtain a distributed trace record of a collection of historical tests executed for an application
120 Obtain code change information of an application change
130 Determine a correlation metric value of each candidate test case relative to the application change based on the distributed trace record and the code change information
140 Determine a target test case based on the correlation metric value of each candidate test case
800 Test case selection apparatus
810 Trace record obtaining unit
820 Code change information obtaining unit
830 Correlation metric value determining unit
840 Test case selection unit
841 Performance metric value determining module
843 Test case selection module
1000 Computing device
1010 Processor
1020 Memory
1030 Internal memory
1040 Communication interface
1060 Bus

**Detailed Description of Embodiments**

The subject matter described herein is now discussed with reference to exemplary implementations. It should be understood that the discussion of these implementations is merely intended to help a person skilled in the art to better understand and implement the subject matter described herein, but not to limit the protection scope, applicability or examples set forth in the claims. The functions and arrangement of the discussed elements can be changed without departing from the protection scope of the specification. Various processes or components may be omitted, replaced, or added in various examples as required. For example, the described method may be performed in an order different from the one described, and the steps may be added, omitted, or combined. In addition, the features described in some examples can also be combined in other examples.

As used herein, the term "include" and variants thereof represent an open term, which means "including but not limited to". The term "based on" represents "at least partially based on". The terms "an embodiment" and "the embodiment" represent "at least one embodiment". The term "another embodiment" denotes "at least one another embodiment". The terms "first", "second", and the like may refer to different or the same objects. Other definitions, whether explicit or implicit, can be included below. Unless expressly specified in the context, the definition of a term is consistent throughout the specification.

In a DevOps-based software development process, software testing should be integrated into code development, code building, and code deployment processes, and should be continuously performed, so that software can be updated throughout a continuous process from development to building to deployment. The foregoing software testing method may also be referred to as continuing testing or continuous testing. Correct implementation of continuing testing can ensure that software quality is fully evaluated in each step of the DevOps process, making it possible to rapidly deliver and deploy a software version free of defects. Therefore, continuous testing is widely used in software development.

DevOps software development is intended to shorten a delivery time of an application and increase a release frequency of the application. Therefore, development time and workload that can be devoted to a release version or a changed version of each application are relatively limited. However, because industrial-grade software is highly complex in terms of both function and architecture, even a minor application change requires a large amount of work for testing and verification on the application.

The current popular microservice software architecture is taken as an example below for description. A typical microservice architecture-based application includes a set of independent components. Such a software architecture provides many advantages. For example, the component can be independently deployed and easily scaled, and supports parallel development across a plurality of teams. However, such a division based on the independently deployable components brings additional complexity to testing and verification. Although these components are independently developed, they need to work together, for example, need to interact with each other to process a specific user task. Therefore, to build sufficient confidence in overall quality of software, it is not enough to test each component separately. All the components need to be tested together. Therefore, even a small incremental code change made for the application requires a large amount of testing and verification, for example, interface testing, function testing, and performance testing, and an actually required workload may be amazing.

In practice, for application changes, development teams or quality assurance personnel usually tend to maximize a test execution strategy, that is, to conduct as sufficient test verification as possible. If testing and verification are insufficient, a risk that a quality defect enters a production environment may exceed a reasonable tolerance. Although such a maximized test execution strategy is safe, an obvious disadvantage exists, that is, it takes a great deal of time and effort and is very inefficient. Apparently, it is a better practice to select some rather than all of test cases for execution, that is, only those test cases correlated with the application changes are executed, and test cases not correlated with the application changes may be ignored, thereby reducing workload of testing and verification.

In view of the foregoing, the embodiments of the present disclosure provide a change correlation analysis-based test case selection method and test case selection apparatus for a DevOps process. With the test case selection method and the test case selection apparatus, a distributed trace record of a collection of historical test cases executed for an application and code change information of an application change are obtained, and a correlation metric value of each candidate test case in a collection of candidate test cases relative to the application change is determined based on the distributed trace record and the code change information. Then, a test case with a high degree of association with the application change is selected from the collection of candidate test cases by using the correlation metric value of each candidate test case, to perform testing and verification. This can reduce a quantity of test cases executed during testing, shorten a time required for testing, and improve test efficiency.

The change correlation analysis-based test case selection method and test case selection apparatus for a DevOps process according to the embodiments of the present disclosure are described below in detail with reference to the drawings.

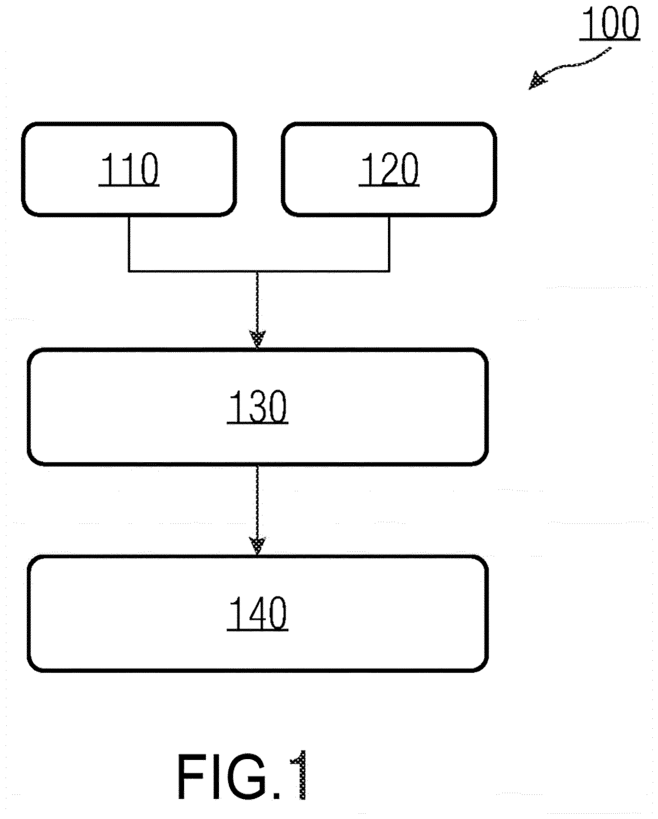

FIG. 1 is an example flowchart of a change correlation analysis-based test case selection method 100 for a DevOps process according to an embodiment of the present disclosure.

As shown in FIG. 1, at 110, a distributed trace record of a collection of historical test cases executed for an application is obtained. In an example, a distributed tracing tool such as Zipkin, Jaeger, or OpenCensus may be used to obtain the distributed trace record of the collection of historical test cases executed for the application. In the present disclosure, the distributed trace record is used to show a processing procedure, in the application, of a user transaction triggered when a test case is executed. In an example, a communication path and interaction information between application components in the processing procedure of the user transaction triggered when the test case is executed are recorded in the distributed trace record. Therefore, whether the application component is tested during the execution of the test case may be determined by detecting whether a specific application component exists in the distributed trace record. Then, a degree of association between the test case and an application change may be evaluated by comparing a changed application component specifically involved in the application change to be verified with an application component actually tested during the execution of the test case.

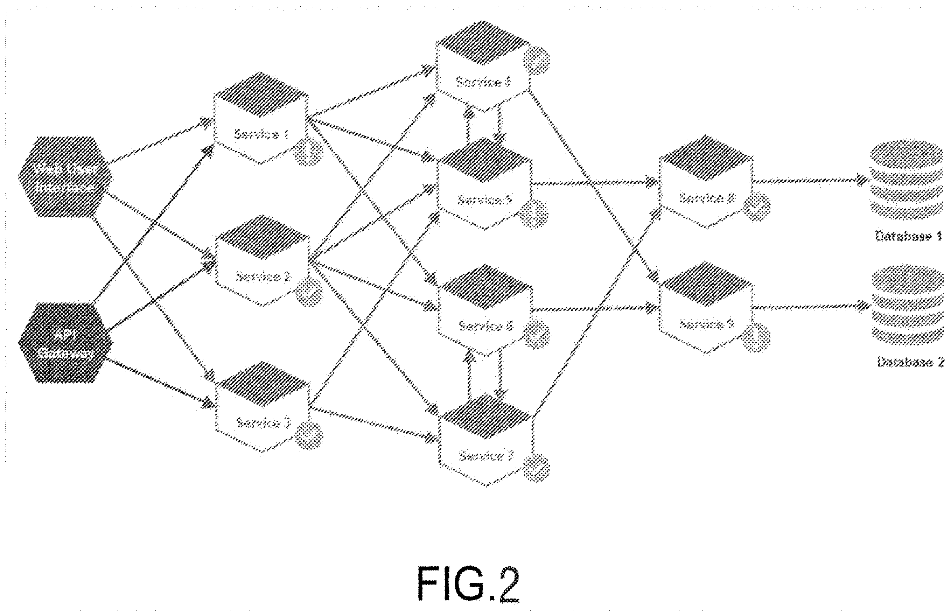

FIG. 2 is an example schematic diagram of an application with a microservice architecture according to an embodiment of the present disclosure.

As shown in FIG. 2, the application has nine service components: a service 1 to a service 9. Each service component independently operates its own processing procedure, and communicates with another service component to jointly implement a specific service function.

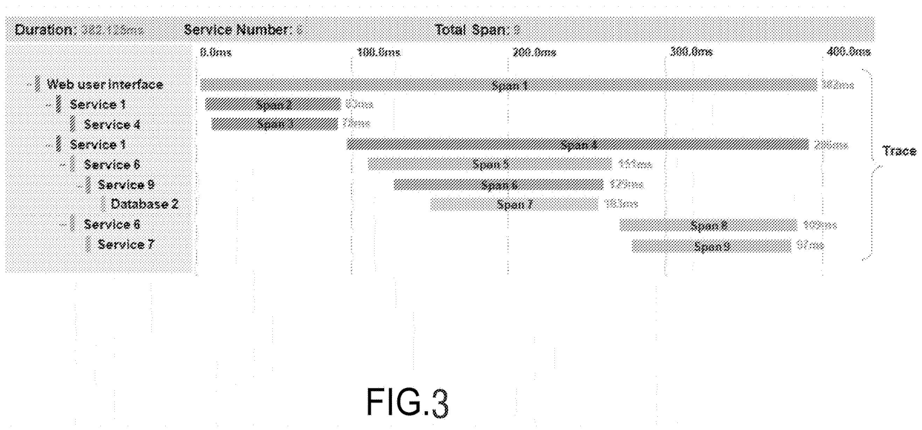

FIG. 3 is an example schematic diagram of a distributed trace record according to an embodiment of the present disclosure. The distributed trace record shown in FIG. 3 is a distributed trace record of a collection of historical test cases executed for the application shown in FIG. 2.

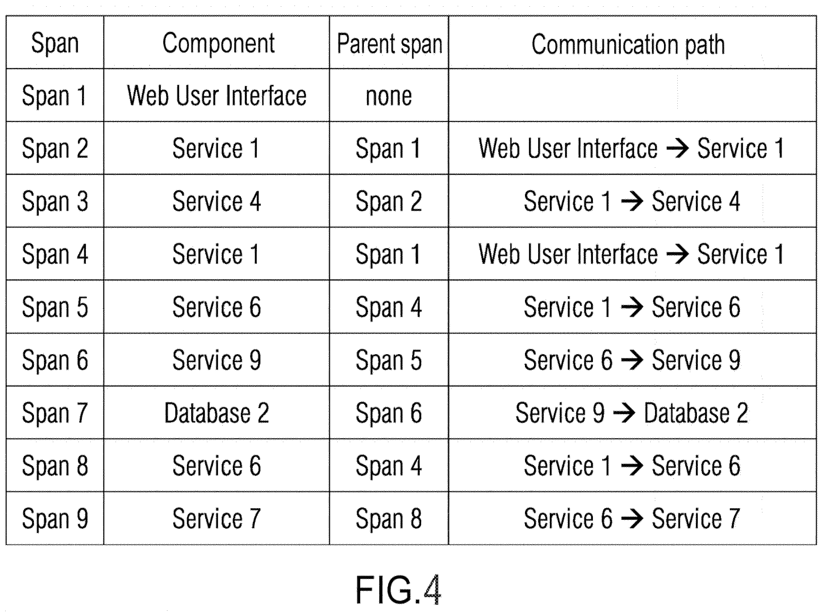

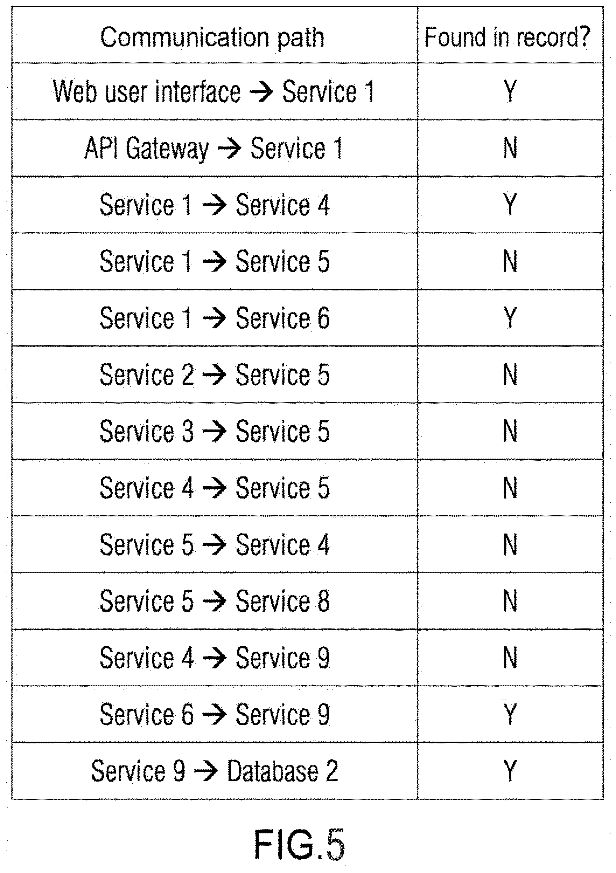

As shown in FIG. 3, the distributed trace record is used to show an overall processing procedure of how a user transaction triggered by executing a test case is processed in an application. The distributed trace record may also be referred to as a distributed trace (trace) in the distributed tracing field. The distributed trace record (trace) includes a plurality of spans. In addition, in FIG. 3, "duration" is used to represent a total processing time of the distributed trace record, "service number" is used to represent a quantity of services in the distributed trace record, and "total span" is used to represent a total quantity of spans in the distributed trace record. In the present disclosure, the span is used to represent an individual processing segment in an overall processing procedure. The span may be a time period spent by a specific operation of a component. In the distributed trace record, there may be a parent-child relationship between spans. For example, as shown in FIG. 3, a span 1 has two child spans: a span 2 and a span 4. When an operation transfers data to another operation or uses a function provided by another operation, there is a parent-child relationship between spans corresponding to the two operations. In other words, if a parent span has a child span in another different application component, it means that interaction occurs between the two application components. For example, a request sent by an application component invokes an operation in another application component. A communication path, an invocation relationship, and interaction information between different application components during test execution can be deduced by parsing the spans in the distributed trace record and a relationship between the spans. FIG. 4 is an example schematic diagram of a span information list according to an embodiment of the present disclosure. The span information list shown in FIG. 4 is derived from the distributed trace record shown in FIG. 3. FIG. 5 is an example schematic diagram of a communication path correlated with a changed application component in an application according to an embodiment of the present disclosure.

Referring back to FIG. 1, at 120, code change information of an application change is obtained. In a development environment of an application, source code of the application is stored in a configuration management database, and a software configuration management tool such as ClearCase, Subversion, or Git may be used to directly obtain code change information, for example, which part of the application is changed, of an application change from the configuration management database. For example, in the example shown in FIG. 2, three components, namely, the service 1, the service 5, and the service 9 are changed in the most recent application change, for example, the service components are indicated with the sign "!" in FIG. 2.

At 130, a correlation metric value of each candidate test case in a collection of candidate test cases relative to the application change is determined based on the distributed trace record and the code change information. In an example of the present disclosure, an example of the correlation metric value may include, but is not limited to, test coverage, test frequency, test efficiency, and any combinations thereof. In other words, a correlation (namely, a degree of association) between the test case and the application change needs to be evaluated in three aspects: the test coverage, the test frequency, and the test efficiency.

In the present disclosure, the term "test coverage" is used to reflect whether a changed part of the application can be actually tested by using a test case to be evaluated. In other words, if the test case is correlated with the application change, the changed part of the application should be detected during the execution of the test case. In an example, an example of the test coverage may include component coverage and/or communication path coverage.

The term "component coverage" is used to quantitatively reflect the test coverage of the testing made for the test case to be evaluated, relative to the changed application component. A larger value of the component coverage indicates a higher test coverage of the test case relative to the changed application component, as well as a higher association between the test case and the application change. The component coverage CCov may be calculated by using the following equation (1):

$$CCov=N_{trace\ path}/N_{total} \quad (1)$$

where $N_{trace\ path}$ represents a quantity of changed application components that appear in the distributed trace record, and $N_{total}$ represents a total quantity of changed application components in the application.

In the example shown in FIG. 2, there are three changed application components: the service 1, the service 5, and the service 9. In addition, it may be learned from the distributed trace record shown in FIG. 3 and FIG. 4 that changed application components that appear in the distributed trace record include the service 1 and the service 9, that is, a quantity of changed application components that appear in the distributed trace record is 2, and therefore CCov=2/3=66.67%.

It is not comprehensive to consider only one coverage metric during association analysis. In an application, a communication path exists when two application components interact. One application component usually has a plurality of related communication paths. Therefore, if an application component is changed, it is required to verify whether all communication paths correlated with the application component can work properly. In this case, during association analysis of the test case and the application change, the communication path coverage may be additionally considered. The term "communication path coverage" is used to reflect a proportion of communication paths correlated with the changed application component and actually detected during the execution of the test case relative to all communication paths correlated with the changed application component. A larger value of the communication path coverage indicates a higher association between the test case and the application change. The communication path coverage CPCov may be calculated by using the following equation (2):

$$CPCov=P_{trace\ path}/P_{total} \quad (2)$$

where $P_{trace\ path}$ represents a quantity of communication paths correlated with the changed application component and appearing in the distributed trace record, and $P_{total}$ represents a total quantity of communication paths correlated with the changed application component.

In the example shown in FIG. 2, the application has three changed application components: the service 1, the service 5, and the service 9. In addition, it may be learned from the communication path information appearing in the distributed trace record shown in FIG. 5 that there are five communication paths that may be found in the distributed trace record to be correlated with the changed application component, and a total quantity of communication paths correlated with the changed application component is 13. Therefore, CPCov=5/13=38.46% .

During the correlation analysis of the test case and the application change, how to evaluate an error detection capability may be additionally considered. The test case is correlated with the application change, which means that the test case has an error detection capability of discovering a defect hidden in the application change. It is difficult to directly measure the error detection capability, but test intensity may be used to represent the error detection capability. In the distributed trace record, if an operation in an application component is used in a processing procedure of a user transaction, a span exists. Therefore, a quantity of spans that invoke the changed application component may be counted, to obtain a quantity of times of invoking the changed application component during the execution of the test case.

Based on the foregoing discussion, in the present disclosure, the test intensity Tint may be defined as a quantity of spans related to the changed application component. In the example shown in FIG. 2, there are three spans related to the changed application component, and therefore a value of the test intensity Tint is 3. A larger value of the test intensity Tint indicates a higher correlation between the test case and the application change.

In addition, during the correlation analysis of the test case and the application change, the test efficiency may be additionally considered. In an example of the present disclosure, an example of test efficiency may include, but is not limited to, time efficiency TEff and working efficiency EEff.

The term "time efficiency TEff" is represented by a proportion of time, spent by the changed application component, in a total processing time of the distributed trace record. The time efficiency TEff may be calculated by using the following formula (3):

$$TEff = T_{changed\ component} / T_{total}\quad (3)$$

where $T_{changed\ component}$ represents the time spent by the changed application component, and $T_{total}$ represents the total processing time of the distributed trace record.

In the example shown in FIG. 2, TEff=(span 2+span 4+span 6)/(span 1+span 2+span 3+span 4+span 5+span 6+span 7+span 8+span 9), and therefore TEff=35.12%.

The term "working efficiency EEff" is represented by a ratio of a quantity of spans related to the changed application component to a total quantity of spans in the distributed trace record. The working efficiency EEff may be calculated by using the following formula (4):

$$EEff = S_{changed\ component} / S_{total}\quad (4)$$

Herein, $S_{changed\ component}$ represents the quantity of spans related to the changed application component, and $S_{total}$ represents the total quantity of spans in the distributed trace record.

In the example shown in FIG. 2, the quantity of spans related to the changed application component is 3, the total quantity of spans in the distributed trace record is 9, and therefore EEff=3/9=33.33%.

After the correlation metric value of each candidate test case is obtained, at 140, a target test case is selected from the collection of candidate test cases based on the correlation metric value of each candidate test case.

Optionally, in an example of the present disclosure, the selecting a target test case from the collection of candidate test cases based on the correlation metric value of each candidate test case may include: determining a performance metric value of each candidate test case based on the correlation metric value of each candidate test case; selecting the target test case from the collection of candidate test cases based on the performance metric value of each candidate test case.

In an example, for each candidate test case, the performance metric value of each candidate test case may be determined based on the correlation metric value of each candidate test case and the weight of the candidate test case, that is, P (f) =$W_{CCov}$*CCov+$W_{CPCov}$*$CP_{Cov}$+$W_{TInt}$*TInt+$W_{TEff}$*TEff+$W_{EEff}$*EEff. Herein, a value of each weight is a decimal between 0 and 1, and a sum of all weights is equal to 1.

It should be noted that in the foregoing weight assignment solution, in an example, a weight may be first assigned to each of the metrics of the test coverage, the test intensity, and the test efficiency. Then, when a correlation metric has a plurality of calculation indicators, for example, when the test coverage has two indicators, namely, the component coverage and the communication path coverage, and the test efficiency has two indicators, namely, the time efficiency and the working efficiency, the weight assigned to the test coverage may be subjected to re-assignment, that is, weights are re-assigned to the component coverage and communication path coverage indicators. Similarly, the weight assigned to the test efficiency is subjected to re-assignment, that is, weights are re-assigned to the time efficiency and the working efficiency. For example, the weight may be evenly assigned to the three correlation metrics: the test coverage, the test intensity, and the test efficiency, and their respective weights are 1/3. Then, the weights 1/3 assigned to the test coverage and the test efficiency are evenly re-assigned, and weights of the component coverage, the communication path coverage, the time efficiency, and the working efficiency are 1/6. Finally, when the performance metric value is calculated, the obtained weights of the component coverage, the communication path coverage, the time efficiency, and the working efficiency are respectively 1/6, and the weight of the test intensity is 1/3.

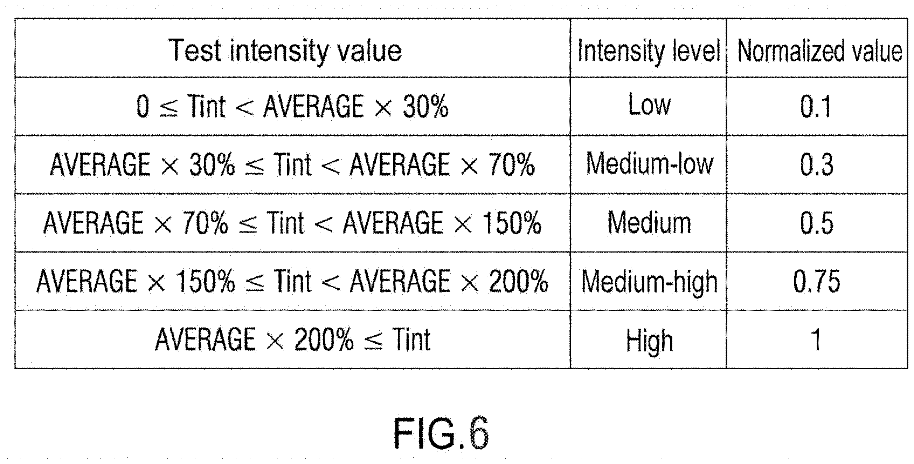

In addition, it should be noted that, optionally, in an example, to ensure that all correlation metric values are within the same value range when the performance measurement value is calculated, the correlation metric values need to be normalized. In the foregoing example, all the correlation metric values except Tint fall within the range of [0, 1], so that only Tint needs to be normalized. FIG. 6 is an example schematic diagram of normalized metric values of test intensity according to an embodiment of the present disclosure. In the example shown in FIG. 6, a label "AVERAGE" represents an average value of Tint values calculated by using all candidate test cases. Then, the normalized correlation metric values are used to calculate the performance metric value. Therefore, the degree of association between the test case and the application change is determined by using the normalized correlation metric value, so that the adverse effects caused by different measurement units of the correlation metric values can be eliminated, thereby improving accuracy of association evaluation analysis.

In addition, optionally, when the target test case is selected from the collection of candidate test cases based on the performance metric value of each candidate test case, in an example, a candidate test case with a performance metric value higher than a predetermined threshold may be selected from the collection of candidate test cases as the target test case. For example, a candidate test case with a performance metric value greater than 0.5 may be determined as the target test case. In another example, a candidate test case with a performance metric value among top N may be selected from the collection of candidate test cases as the target test case, where N is a predetermined positive integer or a predetermined percentage. For example, the top 10 candidate test cases may be determined as target test cases, or the top 20% of the candidate test cases may be determined as target test cases. In another example, the target test case may be selected from the collection of candidate test cases based on a first predetermined test case selection policy and the performance test value of each candidate test case. Herein, the first predetermined test case selection policy is a combined selection policy obtained based on the performance measurement value of each candidate test case. For example, the first predetermined test case selection policy may be ((P(f), Top (20%)) AND (P(f), HigherThan (0.5))), indicating that a test case with a performance metric value among top 20% and greater than 0.5 is selected from the candidate test case as the target test case. It should be noted that what is shown above is merely an example of the first predetermined test case selection policy, and another appropriate combined selection policy may be used in the specification.

In addition, optionally, in an example of the present disclosure, when the target test case is selected from the collection of candidate test cases based on the correlation metric value of each candidate test case, the correlation metric value of each candidate test case may be further provided for a test case selection model to determine the target test case. Herein, the test case selection model may be trained by using model training data that is correlation metric values obtained based on historical data. The correlation metric values obtained based on the historical data are used as the model training data for the test case selection model to train the test case selection model, and the target test case is selected by using the trained test case selection model, so that accuracy of determining the target test case can be improved.

In addition, optionally, in an example of the present disclosure, when the target test case is selected from the collection of candidate test cases based on the correlation metric value of each candidate test case, the target test case may be selected from the collection of candidate test cases based on a second predetermined test case selection policy and the correlation metric value of each candidate test case. Herein, the second predetermined test case selection policy may be a combined selection policy obtained based on the correlation metric value of each candidate test case. For example, the second predetermined test case selection policy may be ((TInt, HigherThan (AVERAGE×150%)) OR ((CCov, TopValues (30%)) AND (CPCov, TopValues (30%)))), indicating that a test case with a test intensity value higher than 1.5 times an average value of test intensity values of all test cases and with both a component coverage and a communication path coverage among top 30% is selected from the candidate test case as the target test case. It should be noted that what is shown above is merely an example of the second predetermined test case selection policy, and another appropriate combined selection policy may be used in the specification.

A plurality of test case selection policies are described above, and different test case selection policies can be flexibly implemented in the DevOps process depending on different processing phases and quality verification objectives. Such flexibility greatly facilitates implementation of continuous testing in the DevOps process.

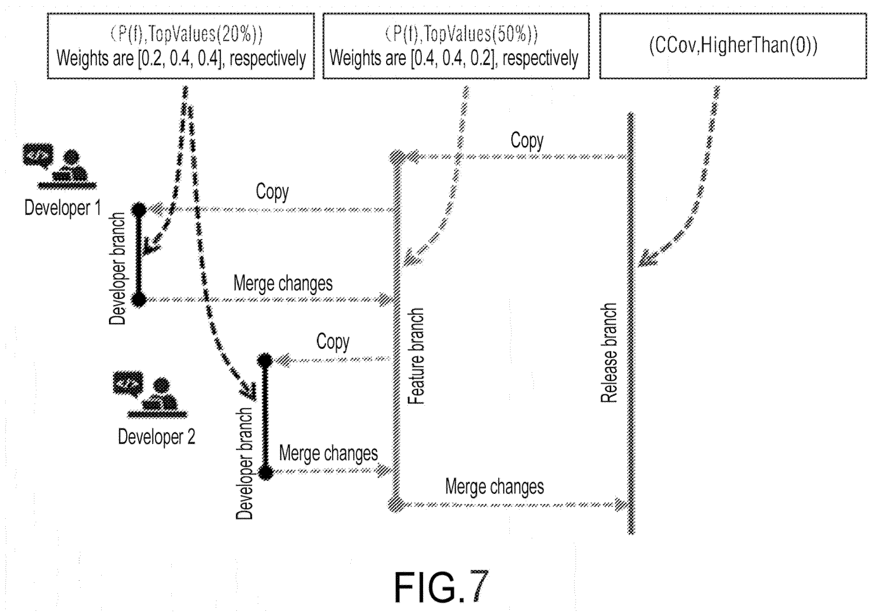

FIG. 7 is an example schematic diagram of using different test case selection policies in a DevOps process.

In the example of FIG. 7, the DevOps process includes three levels of testing, namely, testing for a developer branch, testing for a feature branch, and testing for a release branch. Different levels of testing correspond to different quality verification focuses. Accordingly, test case selection policies are different.

The developer branch is a local copy of an application code base, and is used by a software developer to submit a code change thereof. The testing for the developer branch is designed to provide a rapid quality feedback for the developer, for example, after the developer changes an application, whether the application can work as expected. In other words, a focus of testing and verification is to quickly detect whether there is a defect in the application. Therefore, a test case selection policy based on a performance metric value can be selected. For example, weights 0.2, 0.4, 0.4 are assigned to the test coverage, the test intensity, and the test efficiency, and the weights represent priorities in performance evaluation. Then, after all the performance metric values are calculated, 20% test cases with the best performance metric values are selected as target test cases, that is, a test case selection policy is (P(f), TopValues (20%)), where weights used for the test coverage, the test intensity, and the test efficiency during the calculation of the performance metric values are 0.2, 0.4, and 0.4, respectively.

The feature branch is shared by several developers who jointly complete a task. Whenever the developer considers that working is complete, a code change in a developer branch corresponding to the developer is submitted to the feature branch. The testing for the feature branch should ensure consistency between application changes made by different developers, and provide a feedback in a timely manner when an overall software failure occurs due to a code change submitted by a developer. Therefore, when a test case selection criterion of the testing for the feature branch is considered, the test coverage and the test intensity are more important. In addition, a frequency at which the developer submits the code change to the feature branch is usually less than a frequency at which the developer makes a change in the developer branch of the developer. Therefore, a requirement for the test efficiency can be relaxed compared with the test case selection in the developer branch. In this case, the test case selection policy based on the performance metric value can also be used. However, the weights assigned to the test coverage, the test intensity, and the test efficiency need to be adjusted, for example, the weights assigned to the test coverage, the test intensity, and the test efficiency need to be adjusted to 0.4, 0.4, and 0.2. For example, the test case selection policy may be (P(f), TopValues (50%)), where weights used for the test coverage, the test intensity, and the test efficiency during the calculation of the performance metric values are 0.4, 0.4, and 0.2, respectively.

The release branch is the basis of official software release. After all working is complete, code changes in the feature branch are finally merged herein. The testing for the release branch is designed to maximize a fault detection capability related to the code change. Therefore, the following test case selection policy can be used: (CCov, HigherThan (0)). This means that any test case that can detect at least one changed component should be selected as the target test case. In other words, in the testing for the release branch, it is desired to run all test cases that can detect the changed component, without considering correlation metric values of test intensity and test efficiency thereof, to maximize a software defect detection capability.

The change correlation analysis-based test case selection method for a DevOps process according to the embodiments of the present disclosure is described above with reference to FIG. 1 to FIG. 7.

In the foregoing method, the correlation metric value of each historical test case relative to the application change is determined based on the distributed trace record of the historical test case and the code change information of the application change, and the target test case is selected by using the correlation metric value of each historical test case. Only a test case with a high correlation with the application change may be used to perform testing and verification. This can reduce a quantity of test cases executed during testing, shorten a time required for testing, and improve test efficiency.

In the foregoing method, the test coverage, the test intensity, and the test efficiency are used as correlation metric values, so that a correlation between a test case and an application change can be more accurately reflected. Therefore, a test case with a high correlation can be selected more accurately, thereby further improving test efficiency.

In the foregoing method, a correlation between a test case and an application change may be determined more accurately by using the component coverage indicator and/or the communication path coverage indicator for test coverage evaluation and by using the time efficiency indicator and/or the working efficiency indicator for test efficiency evaluation, thereby improving accuracy of determining the correlation metric value of the test case, and further improving test efficiency.

In the foregoing method, different weights are assigned to the correlation metric value, so that selection of the target test case can better meet an application scenario or a specific requirement.

In the foregoing method, the target test case is selected by using different test selection policies, so that the selected target test case can be applied to different application scenarios, for example, application scenarios that have different application environments, different test objectives, or different application requirements.

In the foregoing method, the target test case can be selected by using the combination policy obtained based on the correlation metric value, so that selection of the target test case can be simpler and more efficient.

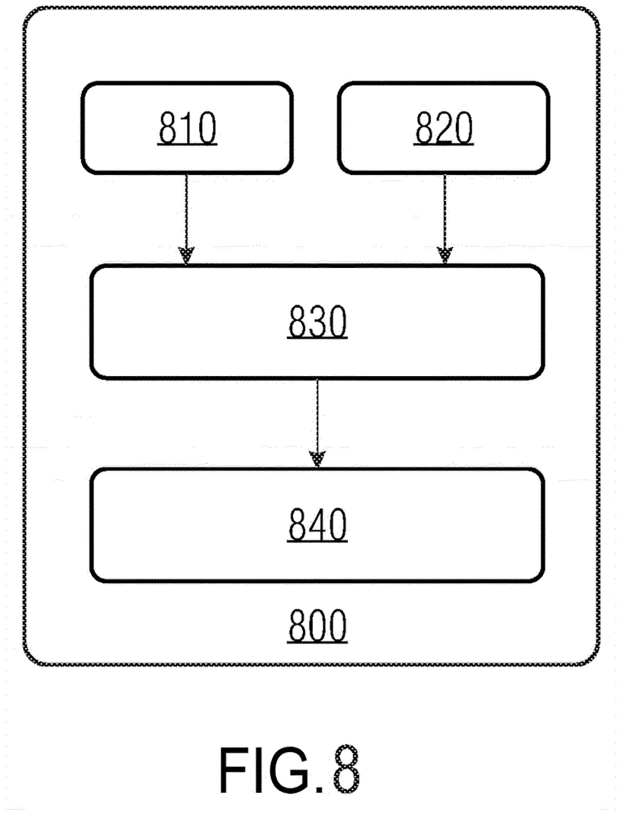

FIG. 8 is an example block diagram of a change correlation analysis-based test case selection apparatus 800 for a DevOps process according to an embodiment of the present disclosure. As shown in FIG. 8, the test case selection apparatus 800 includes a trace record obtaining unit 810, a code change information obtaining unit 820, a correlation metric value determining unit 830, and a test case selection unit 840.

The trace record obtaining unit 810 is configured to obtain a distributed trace record of a collection of historical test cases executed for an application, where the distributed trace record is used to show a processing procedure, in the application, of a user transaction triggered when a test case is executed. For an operation of the trace record obtaining unit 810, refer to the operation of 110 described above with reference to FIG. 1.

The code change information obtaining unit 820 is configured to obtain code change information of an application change. For an operation of the code change information obtaining unit 820, refer to the operation of 120 described above with reference to FIG. 1.

The correlation metric value determining unit 830 is configured to determine a correlation metric value of each candidate test case in a collection of candidate test cases relative to the application change based on the distributed trace record and the code change information. For an operation of the correlation metric value determining unit 830, refer to the operation of 130 described above with reference to FIG. 1.

The test case selection unit 840 is configured to select a target test case from the collection of candidate test cases based on the correlation metric value of each candidate test case. For an operation of the test case selection unit 840, refer to the operation of 140 described above with reference to FIG. 1.

In addition, optionally, in an example, the correlation metric value includes at least one of the following metric values: test coverage, test intensity, and test efficiency.

In addition, optionally, in an example, the test coverage includes component coverage and/or communication path coverage, and/or the test efficiency includes time efficiency and/or working efficiency.

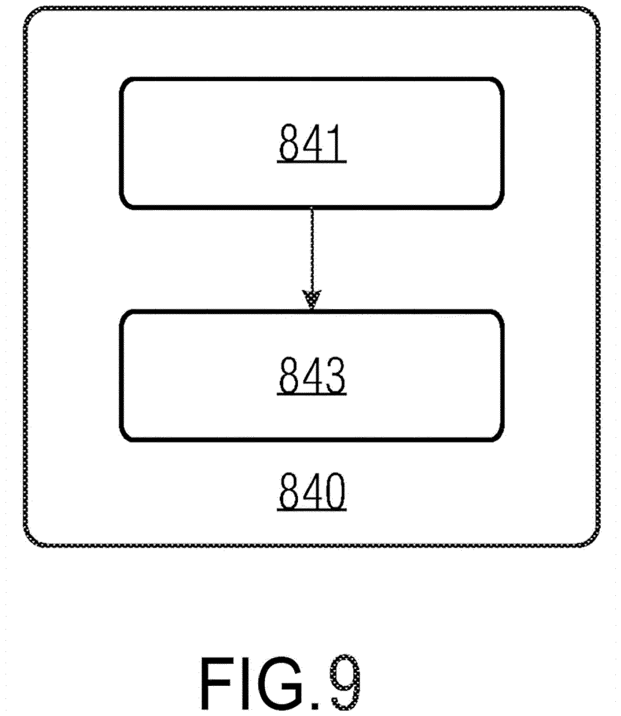

FIG. 9 is a block diagram of an implementation example of a test case selection unit 840 according to an embodiment of the present disclosure. As shown in FIG. 9, the test case selection unit 840 includes a performance metric value determining module 841 and a test case selection module 843.

The performance metric value determining module 841 is configured to determine a performance metric value of each candidate test case based on the correlation metric value of each candidate test case. Then, the test case selection module 843 selects the target test case from the collection of candidate test cases based on the performance metric value of each candidate test case.

In addition, optionally, in an example, each correlation metric value has a weight. Accordingly, the performance measurement value determining module 841 is configured to determine the performance measurement value of each candidate test case based on the correlation metric value of each candidate test case and the weight of the candidate test case.

In addition, optionally, in an example, the test case selection module 843 is configured to select, from the collection of candidate test cases as the target test case, a candidate test case with a performance metric value higher than a predetermined threshold. In another example, the test case selection module 843 is configured to select, from the collection of candidate test cases as the target test case, a candidate test case with a performance measurement value among top N, where N is a predetermined positive integer or a predetermined percentage. In addition, in another example, the test case selection module 843 is configured to select the target test case from the collection of candidate test cases based on a first predetermined test case selection policy and the performance metric value of each candidate test case, where the first predetermined test case selection policy is a combined selection policy obtained based on the performance metric value of each candidate test case.

In addition, optionally, in an example, the test case selection unit 840 is configured to provide the correlation metric value of each candidate test case for a test case selection model to determine the target test case.

In addition, optionally, in an example, the test case selection unit 840 is configured to select the target test case from the collection of candidate test cases based on a second predetermined test case selection policy and the correlation metric value of each candidate test case, where the second predetermined test case selection policy is a combined selection policy obtained based on the correlation metric value of each candidate test case.

The test case selection method and the test case selection apparatus according to the embodiments of the present disclosure are described above with reference to FIG. 1 to FIG. 9. The foregoing test case selection apparatus may be implemented by using hardware, or may be implemented by using software or a combination of hardware and software.

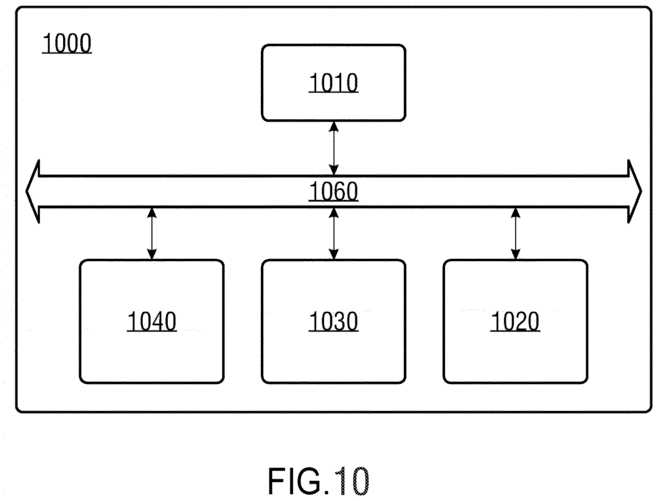

FIG. 10 is a schematic diagram of a computing device 1000 for implementing a change correlation analysis-based test case selection process according to an embodiment of the present disclosure. As shown in FIG. 10, the computing device 1000 may include at least one processor 1010, a memory (for example, a non-volatile memory) 1020, an internal memory 1030, and a communication interface 1040, and the at least one processor 1010, the memory 1020, the internal memory 1030, and the communication interface 1040 are connected together via a bus 1060. The at least one processor 1010 executes at least one computer-readable instruction (namely, the foregoing element implemented in a software form) stored or encoded in the memory.

In an embodiment, the memory stores computer executable instructions that, when executed, cause the at least one processor 1010 to perform the following: obtaining a distributed trace record of a collection of historical test cases executed for an application and code change information of an application change, where the distributed trace record is used to show a processing procedure, in the application, of a user transaction triggered when a test case is executed; determining a correlation metric value of each candidate test case in a collection of candidate test cases relative to the application change based on the distributed trace record and the code change information; and selecting a target test case from the collection of candidate test cases based on the correlation metric value of each candidate test case.

It should be understood that the computer-executable instructions stored in the memory, when executed, cause the at least one processor 1010 to perform various operations and functions described above with reference to FIG. 1 to FIG. 9 in the embodiments of the specification.

According to an embodiment, a program product such as a machine-readable medium (for example, a non-transitory machine-readable medium) is provided. The machine-readable medium may include instructions (namely, the foregoing element implemented in a software form) that, when executed by a machine, cause the machine to perform various operations and functions described above with reference to FIG. 1 to FIG. 9 in the embodiments of the specification. Specifically, a system or an apparatus with a readable storage medium may be provided, and software program code for implementing the functions of any embodiment described above is stored on the readable storage medium, and a computer or a processor of the system or apparatus is caused to read and execute the instructions stored in the readable storage medium.

In this condition, the program code read from the readable medium may implement the function of any one of the foregoing embodiments, and therefore the machine-readable code and the readable storage medium storing the machine-readable code constitute a part of the present invention.

Embodiments of the readable storage medium include a floppy disk, a hard disk, a magnetic optical disc, a compact disc (such as CD-ROM, CD-R, CD-RW, DVD-ROM, DVD-RAM, DVD-RW, and DVD-RW), a magnetic tape, a non-volatile memory card, and a ROM. Optionally, the program code may be downloaded from a server computer or a cloud via a communication network.

A person skilled in the art should understand that various variations and modifications can be made to the above various embodiments without departing from the essence of the invention. Therefore, the protection scope of the present invention should be defined by the appended claims.

It should be noted that not all the steps and units in the procedures and system structure diagrams described above are necessary, and some steps or units may be omitted according to a practical requirement. An order of performing the steps is not fixed, and may be determined as required. The apparatus structure described in the various embodiments above may be a physical structure, or may be a logical structure. In other words, some units may be implemented by the same physical entity, or some units may be implemented separately by a plurality of physical entities, or may be implemented together by some components in a plurality of independent devices.

In the various embodiments above, a hardware unit or module may be implemented mechanically or electrically. For example, a hardware unit, a module, or a processor may include a permanent dedicated circuit or logic (such as a dedicated processor, FPGA, or ASIC) to complete a corresponding operation. The hardware unit or the processor may also include a programmable logic or circuit (such as a general-purpose processor or another programmable processor), and may be set temporarily by software to complete a corresponding operation. The specific implementation (mechanically, or a dedicated permanent circuit, or a temporarily set circuit) may be determined in consideration of cost and time.

Exemplary embodiments are described above in the specific embodiments set forth with reference to the drawings, but do not represent all the embodiments that can be implemented or fall within the protection scope of the claims. The term "exemplary" used throughout the present specification means "used as an example, an instance, or an illustration", but does not mean "preferred" or "advantageous" over the other embodiments. For the purpose of providing an understanding of the described technologies, the specific embodiments include specific details. However, the technologies can be implemented without the specific details. In some embodiments, in order to avoid obscuring the described concepts in the embodiments, commonly known structures and apparatuses are shown in the form of a block diagram.

The descriptions above of the present disclosure are provided to enable any person of ordinary skill in the art to implement or use the present disclosure. For a person of ordinary skill in the art, various modifications made to the present disclosure are obvious and the general principles defined herein may also be applied to other variants without departing from the protection scope of the present disclosure. Therefore, the present disclosure is not limited to the examples and designs described herein, and corresponds to the widest scope in accordance with the principles and novel features disclosed herein.

## Claims

1. A change correlation analysis-based test case selection method (100) for a development and operations process, comprising:

   obtaining (110) a distributed trace record of a collection of historical test cases executed for an application and obtaining (120) code change information of an application change, wherein the distributed trace record is used to show a processing procedure, in the application, of a user transaction triggered when a test case is executed;
   determining (130) a correlation metric value of each candidate test case in a collection of candidate test cases relative to the application change based on the distributed trace record and the code change information; and
   selecting (140) a target test case from the collection of candidate test cases based on the correlation metric value of each candidate test case.

2. The test case selection method (100) according to claim 1, wherein the correlation metric value comprises at least one of the following metric values: test coverage, test intensity, and test efficiency.

3. The test case selection method (100) according to claim 2, wherein the test coverage comprises component coverage and/or communication path coverage, and/or
   the test efficiency comprises time efficiency and/or working efficiency.

4. The test case selection method (100) according to claim 2, wherein the correlation metric value comprises a normalized correlation metric value.

5. The test case selection method (100) according to any one of claims 1 to 4, wherein the selecting (140) a target test case from the collection of candidate test cases based on the correlation metric value of each candidate test case comprises:

   determining a performance metric value of each candidate test case based on the correlation metric value of each candidate test case; and selecting the target test case from the collection of candidate test cases based on the performance metric value of each candidate test case.

6. The test case selection method (100) according to claim 5, wherein each correlation metric value has a weight; and
   the determining a performance metric value of each candidate test case based on the correlation metric value of each candidate test case comprises:
   determining the performance metric value of each candidate test case based on the correlation metric value of each candidate test case and the weight of the candidate test case.

7. The test case selection method (100) according to claim 5, wherein the selecting the target test case from the collection of candidate test cases based on the performance metric value of each candidate test case comprises:

   selecting, from the collection of candidate test cases as the target test case, a candidate test case with a performance metric value higher than a predetermined threshold;
   selecting, from the collection of candidate test cases as the target test case, a candidate test case with a performance metric value among top N, wherein N is a predetermined positive integer or a predetermined percentage; or
   selecting the target test case from the collection of candidate test cases based on a first predetermined test case selection policy and the performance metric value of each candidate test case, wherein the first predetermined test case selection policy is a combined selection policy obtained based on the performance metric value of each candidate test case.

8. The test case selection method (100) according to any one of claims 1 to 4, wherein the selecting (140) a target test case from the collection of candidate test cases based on the correlation metric value of each candidate test case comprises:
providing the correlation metric value of each candidate test case for a test case selection model to determine the target test case.

9. The test case selection method (100) according to any one of claims 1 to 4, wherein the selecting (140) a target test case from the collection of candidate test cases based on the correlation metric value of each candidate test case comprises:
selecting the target test case from the collection of candidate test cases based on a second predetermined test case selection policy and the correlation metric value of each candidate test case, wherein the second predetermined test case selection policy is a combined selection policy obtained based on the correlation metric value of each candidate test case.

10. A change correlation analysis-based test case selection apparatus (800) for a development and operations process, comprising:

    a trace record obtaining unit (810), configured to obtain a distributed trace record of a collection of historical test cases executed for an application, wherein the distributed trace record is used to show a processing procedure, in the application, of a user transaction triggered when a test case is executed;
    a code change information obtaining unit (820), configured to obtain code change information of an application change;
    a correlation metric value determining unit (830), configured to determine a correlation metric value of each candidate test case in a collection of candidate test cases relative to the application change based on the distributed trace record and the code change information; and
    a test case selection unit (840), configured to select a target test case from the collection of candidate test cases based on the correlation metric value of each candidate test case.

11. The test case selection apparatus (800) according to claim 10, wherein the correlation metric value comprises at least one of the following metric values: test coverage, test intensity, and test efficiency.

12. The test case selection apparatus (800) according to claim 11, wherein the test coverage comprises component coverage and/or communication path coverage, and/or
    the test efficiency comprises time efficiency and/or working efficiency.

13. The test case selection apparatus (800) according to any one of claims 10 to 12, wherein the test case selection unit (840) comprises:

> a performance measurement value determining module (841), configured to determine a performance metric value of each candidate test case based on the correlation metric value of each candidate test case; and
> a test case selection module (843), configured to select the target test case from the collection of candidate test cases based on the performance metric value of each candidate test case.

14. The test case selection apparatus (800) according to claim 13, wherein each correlation metric value has a weight; and
the performance metric value determining module (841) is configured to determine the performance metric value of each candidate test case based on the correlation metric value of each candidate test case and the weight of the candidate test case.

15. The test case selection apparatus (800) according to claim 13, wherein the test case selection module (843) is configured to:

> select, from the collection of candidate test cases as the target test case, a candidate test case with a performance metric value higher than a predetermined threshold;
> select, from the collection of candidate test cases as the target test case, a candidate test case with a performance metric value among top N, wherein N is a predetermined positive integer or a predetermined percentage; or
> select the target test case from the collection of candidate test cases based on a first predetermined test case selection policy and the performance metric value of each candidate test case, wherein the first predetermined test case selection policy is a combined selection policy obtained based on the performance metric value of each candidate test case.

16. The test case selection apparatus (800) according to any one of claims 10 to 12, wherein the test case selection unit (840) is configured to provide the correlation metric value of each candidate test case for a test case selection model to determine the target test case.

17. The test case selection apparatus (800) according to any one of claims 10 to 12, wherein the test case selection unit (840) is configured to select the target test case from the collection of candidate test cases based on a second predetermined test case selection policy and the correlation metric value of each candidate test case, wherein the second predetermined test case selection policy is a combined selection policy obtained based on the correlation metric value of each candidate test case.

18. A computing device (1000), comprising:

> at least one processor (1010); and
> a memory (1020) coupled to the at least one processor (1010), wherein the memory is configured to store instructions that, when executed by the at least one processor (1010), cause the at least one processor (1010) to perform a method according to any one of claims 1 to 9.

19. A machine-readable storage medium storing executable instructions that, when executed, cause the machine to perform a method according to any one of claims 1 to 9.

20. A computer program product tangibly stored on a computer-readable medium and comprising computer executable instructions that, when executed, cause at least one processor to perform a method according to any one of claims 1 to 9.

100

110 120

130

140

# FIG.1

FIG.2

FIG.3

| Span | Component | Parent span | Communication path |
|---|---|---|---|
| Span 1 | Web User Interface | none | |
| Span 2 | Service 1 | Span 1 | Web User Interface → Service 1 |
| Span 3 | Service 4 | Span 2 | Service 1 → Service 4 |
| Span 4 | Service 1 | Span 1 | Web User Interface → Service 1 |
| Span 5 | Service 6 | Span 4 | Service 1 → Service 6 |
| Span 6 | Service 9 | Span 5 | Service 6 → Service 9 |
| Span 7 | Database 2 | Span 6 | Service 9 → Database 2 |
| Span 8 | Service 6 | Span 4 | Service 1 → Service 6 |
| Span 9 | Service 7 | Span 8 | Service 6 → Service 7 |

FIG.4

EP 4 202 689 A1

| Communication path | Found in record? |
|---|---|
| Web user interface → Service 1 | Y |
| API Gateway → Service 1 | N |
| Service 1 → Service 4 | Y |
| Service 1 → Service 5 | N |
| Service 1 → Service 6 | Y |
| Service 2 → Service 5 | N |
| Service 3 → Service 5 | N |
| Service 4 → Service 5 | N |
| Service 5 → Service 4 | N |
| Service 5 → Service 8 | N |
| Service 4 → Service 9 | N |
| Service 6 → Service 9 | Y |
| Service 9 → Database 2 | Y |

# FIG.5

| Test intensity value | Intensity level | Normalized value |
|---|---|---|
| $0 \le \text{Tint} < \text{AVERAGE} \times 30\%$ | Low | 0.1 |
| $\text{AVERAGE} \times 30\% \le \text{Tint} < \text{AVERAGE} \times 70\%$ | Medium-low | 0.3 |
| $\text{AVERAGE} \times 70\% \le \text{Tint} < \text{AVERAGE} \times 150\%$ | Medium | 0.5 |
| $\text{AVERAGE} \times 150\% \le \text{Tint} < \text{AVERAGE} \times 200\%$ | Medium-high | 0.75 |
| $\text{AVERAGE} \times 200\% \le \text{Tint}$ | High | 1 |

# FIG.6

EP 4 202 689 A1

FIG.7

```
┌─────────────────────────────────────────┐
│                                         │
│   ┌──────────────┐   ┌──────────────┐   │
│   │     810      │   │     820      │   │
│   └──────┬───────┘   └──────┬───────┘   │
│          │                  │           │
│          ▼                  ▼           │
│   ┌─────────────────────────────────┐   │
│   │              830                │   │
│   └────────────────┬────────────────┘   │
│                    │                    │
│                    ▼                    │
│   ┌─────────────────────────────────┐   │
│   │              840                │   │
│   └─────────────────────────────────┘   │
│                  800                    │
│                                         │
└─────────────────────────────────────────┘
```

# FIG.8

841

843

840

FIG.9

FIG.10

## INTERNATIONAL SEARCH REPORT

| International application No. |
| --- |
| **PCT/CN2020/117921** |

**A.     CLASSIFICATION OF SUBJECT MATTER**

G06F 11/36(2006.01)i

According to International Patent Classification (IPC) or to both national classification and IPC

**B.     FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, EPODOC, WPI, CNKI, ISI: 变更, 相关性, 测试, 用例, 选择, 代码, 应用程序, 流程, 记录, change, dependency, test, case, select, code, application, process, record

**C.     DOCUMENTS CONSIDERED TO BE RELEVANT**

| Category* | Citation of document, with indication, where appropriate, of the relevant passages | Relevant to claim No. |
| --- | --- | --- |
| X | CN 107515826 A (GUANGZHOU ALIBABA LITERATURE INFORMATION TECHNOLOGY CO., LTD.) 26 December 2017 (2017-12-26) description, paragraphs [0055]-[0102] and figures 2-5 | 1-20 |
| A | CN 110413506 A (PING AN PUHUI ENTERPRISE MANAGEMENT CO., LTD.) 05 November 2019 (2019-11-05) entire document | 1-20 |
| A | CN 108427637 A (PING AN TECHNOLOGY (SHENZHEN) CO., LTD.) 21 August 2018 (2018-08-21) entire document | 1-20 |
| A | CN 111209217 A (SUZHOU INSPUR INTELLIGENT TECHNOLOGY CO., LTD.) 29 May 2020 (2020-05-29) entire document | 1-20 |
| A | US 2017046245 A1 (CA, INC.) 16 February 2017 (2017-02-16) entire document | 1-20 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 June 2021** | **23 June 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/117921**

| Patent document cited in search report | | | Publication date (day/month/year) | Patent family member(s) | | | Publication date (day/month/year) |
|---|---|---|---|---|---|---|---|
| CN | 107515826 | A | 26 December 2017 | CN | 107515826 | B | 01 December 2020 |
| CN | 110413506 | A | 05 November 2019 | | None | | |
| CN | 108427637 | A | 21 August 2018 | WO | 2019140850 | A1 | 25 July 2019 |
| CN | 111209217 | A | 29 May 2020 | | None | | |
| US | 2017046245 | A1 | 16 February 2017 | US | 9720813 | B2 | 01 August 2017 |

Form PCT/ISA/210 (patent family annex) (January 2015)